# EUROPEAN PATENT APPLICATION

(11) **EP 3 835 171 A1**
(43) Date of publication of application: **16.06.2021**
(21) Application number: 19847009.8
(22) Date of filing: 05.07.2019
(51) Int. Cl.: B61L 27/00, G06Q 50/30

(54) **INFORMATION PROCESSING SYSTEM AND INFORMATION PROCESSING METHOD**

(30) Priority: 07.08.2018 JP 2018148138
(71) Applicant: Hitachi, Ltd., Tokyo 100-8280 (JP)
(72) Inventor: KAWASAKI, Kenji, Tokyo 100-8280 (JP); TOMIYAMA, Tomoe, Tokyo 100-8280 (JP); MOCHIZUKI, Tomoyuki, Tokyo 100-8280 (JP); IKAWA, Hiromi, Tokyo 100-8280 (JP); MAYA, Yuzuru, Tokyo 100-8280 (JP); MIZUKAWA, Hideo, Tokyo 100-8280 (JP); TESHIMA, Hisanori, Tokyo 100-8280 (JP); HANDA, Takeshi, Tokyo 100-8280 (JP); MAEKAWA, Yuki, Tokyo 100-8280 (JP)
(74) Representative: Mewburn Ellis LLP
(86) International application number: PCT/JP2019/026855
(87) International publication number: WO 2020/031580

(57) **Abstract**

Congestion in a transport facility is effectively diminished while suppressing an operational cost. An information processing system for managing information associated with services of the transport facility performs demand prediction for the transport facility, manages diagram information about the transport facility, manages fare information about the transport facility, generates a change plan of at least one of a diagram and fares according to a result of the demand prediction, and applies the change plan to the diagram information or the fare information. The information processing system generates the change plan when an amount of increase in a demand in a certain time zone is equal to or greater than a preset first threshold. The information processing system generates both the change plan of the diagram and the change plan of the fares when the amount of increase in the demand is equal to or greater than a second threshold, generates the change plan of the diagram when the amount of increase in the demand is smaller than the second threshold and a time zone for which the demand prediction is performed is a congestion prediction time zone, and generates the change plan of the diagram of fares when the amount of increase in the demand is smaller than the second threshold and the time zone for which the demand prediction is performed is not the congestion prediction time zone.

## Description

### Technical Field

The present invention relates to an information processing system and an information processing method.

### Background Art

The present application is based upon and claims the benefit of priority from Japanese Patent Application No. 2018-148138, filed August 7, 2018, the entire contents of which are incorporated herein by reference.

Transport facilities such as railways, buses, ships, and airplanes run according to a predetermined diagram. For that reason, congestion often occurs in a case of an increase in demand for some reason, compared with ordinary time such as time of holding an event.

As a method of resolving such congestion in transport facilities, Patent Literature 1 describes, for example, a point calculating apparatus for calculating a point for each of a plurality of transport facilities used to move to the same destination in response to a congestion degree about passengers getting on each of the transport facilities, the point calculating apparatus acquiring the congestion degree, calculating the point for each transport facility in response to the congestion degree of the transport facility, allocating the point calculated for each transport facility to a user getting on the transport facility, and calculating, using each acquired congestion degree, the point to be allocated for each corresponding transport facility in such a manner that the point decreases as the congestion degree increases.

Furthermore, Patent Literature 2 describes, for example, a computer equipped with a passenger request database (hereinafter, referred to as "passenger request DB") that stores at least departure stations, arrival stations, and desired arrival clock times by as much as the number of passengers, the computer calculating, as a passenger cost, a disutility value of each passenger for a given train diagram in a case in which all passengers stored in the passenger request DB use trains in the given train diagram, and obtaining a total passenger cost; calculating an operational cost of a railway company for the given train diagram in a case in which the trains run according to the diagram; and applying a solution diagram candidate as the given train diagram, and exercising control in such a manner that processing for calculating the passenger costs and the operational cost is repeatedly performed while performing processing for changing the solution diagram candidate, and determining the solution diagram candidate having a minimum sum of the calculated passenger costs and the calculated operational cost as a solution diagram.

### Citation List

### Patent Literature

PTL1: PCT Patent Publication No. WO2005/098697
PTL2: JP-2007-237948-A

### Summary of Invention

### Technical Problem

The technology of Patent Document 1 described above is intended to disperse the congestion in transport facilities by allocating the point calculated for each transport facility to each user getting on the transport facility. However, each of the transport facilities such as trains and cars has a limited capacity; thus, it is not always possible to cope with a case, for example, of a sudden increase in demand. Furthermore, in the technology of Patent Document 2, the diagram is changed on the basis of the passenger costs that are the disutility values of the passengers and the operational cost of the railway company; however, there is no avoiding increasing in cost if a train frequency is increased in the diagram for resolving the congestion.

Furthermore, it is conceivable to combine methods of Patent Documents 1 and 2; however, only the simple combination of the two methods does not necessarily enable expected effects to be obtained. For example, even if the point is provided at morning rush hour time, it is impossible to expect an effect of diminishing the congestion with many passengers in a situation in which late coming is not acceptable.

The present invention has been achieved to solve the problems, and an object of the present invention is to provide an information processing system and an information processing method capable of effectively diminishing congestion in a transport facility while suppressing an operational cost.

### Solution to Problem

One aspect of the present invention to attain the object described above is an information processing system for managing information associated with services of a transport facility, including: a demand prediction section that performs demand prediction for the transport facility; a diagram information management section that manages diagram information that is information associated with a diagram of the transport facility; a fare information management section that manages fare information that is information associated with fares of the transport facility; a change plan generation section that generates a change plan of at least one of the diagram and the fare in response to a result of the demand prediction; and a change plan application section that applies the change plan of the diagram to the diagram information and that applies the change plan of the fares to the fare information.

Other problems and methods for solving the problems disclosed in the present application are readily apparent from a section of modes for carrying out the invention and drawings.

### Advantageous Effects of Invention

According to the present invention, it is possible to effectively diminish the congestion in the transport facility while suppressing the operational cost.

### Brief Description of the Drawings

FIG. 1 is a diagram depicting a schematic configuration of an information processing system.
FIG. 2 is a diagram depicting a hardware configuration of a change plan generation apparatus.
FIG. 3 is a diagram depicting principal functions provided in the change plan generation apparatus.
FIG. 4 is a sequence diagram illustrating a flow of processing performed by the information processing system.
FIG. 5 is an example of an effect target value setting screen.
FIG. 6 is an example of effect target value information.
FIG. 7 is an example of demand prediction information.
FIG. 8 is an example of a change plan of a diagram.
FIG. 9 is an example of a change plan of fares.
FIG. 10 is a flowchart illustrating change plan generation processing.
FIG. 11 is an example of a change plan confirmation screen.
FIG. 12 is an example of change plan application processing.
FIG. 13 is an example of a users' service screen.

### Description of Embodiments

Embodiments of the present invention will be described hereinafter with reference to the drawings.

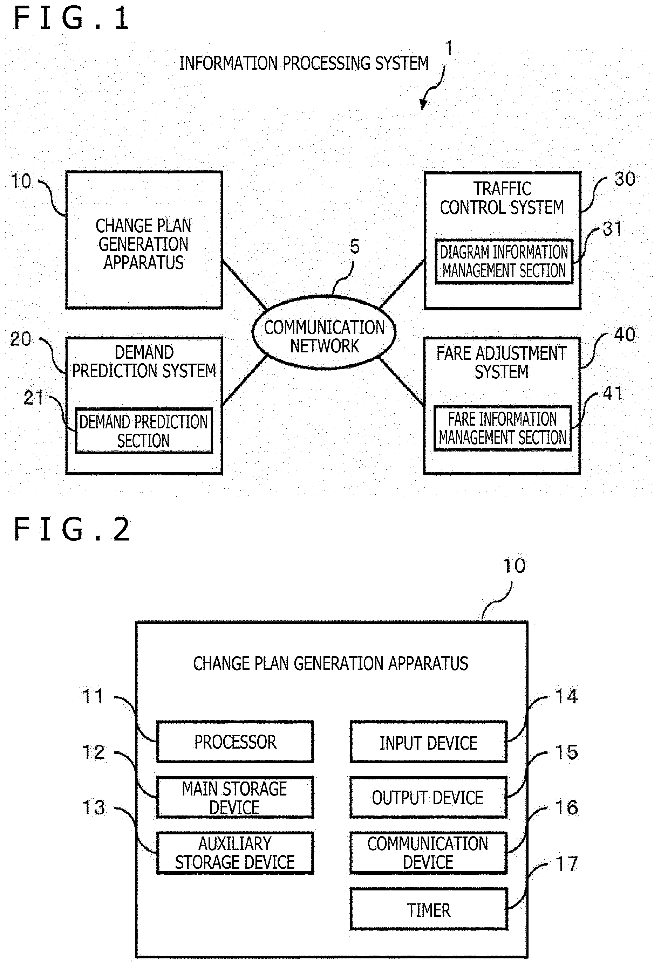

FIG. 1 depicts a schematic configuration of a system for managing information associated with services of a transport facility (hereinafter, referred to as "information processing system 1") to be described as one embodiment of the present invention. As depicted in FIG. 1, the information processing system 1 includes a change plan generation apparatus 10, a demand prediction system 20, a traffic control system 30, and a fare adjustment system 40. These constituent elements are each configured with an information processing apparatus (computer) and connected to one another via a communication network 5 in a communicable state. Examples of the communication network 5 include a WAN (Wide Area Network), a LAN (Local Area Network), an intranet, a public telecommunication network, and a common carrier leased line.

Two or more out of the change plan generation apparatus 10, the demand prediction system 20, the traffic control system 30, and the fare adjustment system 40 may be realized by a common information processing apparatus. Alternatively, each of these constituent elements may be realized, like a virtual server or a cloud server in a cloud system, using virtual resources. Functions provided by each of the demand prediction system 20, the traffic control system 30, and the fare adjustment system 40 are realized by, for example, causing a processor in the information processing apparatus configuring each system to read and execute programs stored in a storage device.

The information processing system 1 performs demand prediction and traffic control, fare (usage fee) adjustment, planning of a diagram and fares, and the like with respect to a transport facility. While an example in which the transport facility is a railway is described hereinafter, a type of the transport facility is not always limited and other types of the transport facility, for example, buses, ships, and airplanes are applicable. The demand prediction system 20, the traffic control system 30, and the fare adjustment system 40 can be each realized using a well-known apparatus or system.

The demand prediction system 20 includes a demand prediction section 21 that is a function to perform demand prediction for a transport facility. The demand prediction section 21 predicts a demand for the transport facility from future users (passengers) on the basis of, for example, past statistical data, information about latest events held in the surroundings of railway lines, sensor data such as video pictures and the like captured by monitoring cameras installed at stations, and real time data such as entry and exit situations at automatic ticket checkers. It is noted that the demand prediction for the transport facility may be performed using a well-known AI approach or a well-known machine learning method. The demand prediction section 21 provides (transmits) a result of predicting the demand (hereinafter, referred to as "demand prediction information") to the change plan generation apparatus 10 via the communication network 5. The demand prediction system 20 repeatedly performs the demand prediction for the transport facility according to a preset schedule and accumulates and stores a result of the demand prediction at every time.

The traffic control system 30 is a system that manages train services. The traffic control system 30 includes, for example, a train tracking apparatus, an automatic route control apparatus, a train diagram generation apparatus, a train diagram management apparatus, a rescheduling/dispatching apparatus, and the like. The traffic control system 30 controls, monitors, and manages traffic lights, railroad switches, train on-track positions, and the like, and causes trains to run safely and accurately according to diagram information that is information associated with a diagram of the transport facility. The traffic control system 30 includes a diagram information management section 31 that manages the diagram information. The diagram information management section 31 transmits latest diagram information to the change plane generation apparatus 10 as needed via the communication network 5. Upon receiving an update instruction to update the diagram transmitted from the change plan generation apparatus 10 via the communication network 5, the diagram information management section 31 updates the diagram information according to the received update instruction.

The fare adjustment system 40 calculates/adjusts a fare (usage fee) of each user in response to train boarding and alighting of the user on the basis of a railway tariff and a fare system (various discounting and the like). The fare adjustment system 40 includes, for example, a center server apparatus and various station service instruments (such as automatic ticket checkers, ticket-vending machines, station staff processing machines) communicably connected to the center server apparatus. The center server apparatus has, for example, a management function to manage master information about fare information and the like, a profit management function, and an IC card information management function. The fare adjustment system 40 includes a fare information management section 41 that manages the fare information that is information associated with fares of the transport facility. The fare information management section 41 provides (transmits) latest fare information to the change plan generation apparatus 10 via the communication network 5 as needed. Upon receiving an update instruction to update the fare information transmitted from the change plan generation apparatus 10 via the communication network 5, the fare information management section 41 updates the fare information according to the received update instruction.

The change plan generation apparatus 10 generates change plans of the diagram and the fares on the basis of demand prediction information transmitted from the demand prediction system 20, and transmits update instructions to update the diagram information and the master information based on the generated change plans to the traffic control system 30 and the fare adjustment system 40 via the communication network 5. The change plan generation apparatus 10 generates a change plan of fares in predetermined time zones before and after a time zone in which congestion is predicted in order to diminish the congestion that occurs following the increase in demand for the transport facility. It is noted that the change plan generation apparatus 10 may generate the change plan using, for example, the well-known AI approach or the well-known machine learning method.

FIG. 2 depicts a hardware configuration of the change plan generation apparatus 10. As depicted in FIG. 2, the change plan generation apparatus 10 includes a processor 11, a main storage device 12, an auxiliary storage device 13, an input device 14, an output device 15, a communication device 16, and a timer 17. These constituent elements are communicably connected to one another via communication means such as a bus that is not depicted.

The processor 11 includes, for example, a CPU (Central Processing Unit) or an MPU (Micro Processing Unit). The main storage device 12 is an apparatus that stores programs and data, and includes, for example, a ROM (Read Only Memory), a RAM (Random Access Memory), a nonvolatile semiconductor memory (NVRAM (Non Volatile RAM)), or the like.

The auxiliary storage device 13 is, for example, a semiconductor memory (such as an SSD (Solid State Drive), an SD memory card, or a USB (Universal Serial Bus) memory), a hard disc drive, an optical storage device (such as a CD (Compact Disc) or a DVD (Digital Versatile Disc)), or a transportable recording medium reading/writing device or the like into which a transportable recording medium is set. Programs and data stored in the auxiliary storage device 13 are loaded to the main storage device 12 as needed. The auxiliary storage device 13 may be, for example, a NAS (Network Attached Storage) communicably connected to the processor 11 via the communication means.

The input device 14 is a user interface that receives external inputs and is, for example, a keyboard, a mouse, a touch panel, and a transportable recording medium reading device. The output device 15 is a user interface that provides various information such as processing progresses and processing results to outside, and is, for example, a screen display device (such as an LCD (Liquid Crystal Display) or a graphic card), a printer, and a transportable recording medium writing device.

The communication device 16 is a wired or wireless type communication interface that realizes communication with other apparatuses held via the communication network 5, and is, for example, an NIC (Network Interface Card) or a wireless communication module. It is noted that the change plan generation apparatus 10 may be configured in such a manner that information is input to and output from other apparatuses via the communication device 16, that is, the communication device 16 functions as the input device 14 and the output device 15. The timer 17 is configured using, for example, an NTP (Network Time Protocol) communication function and an RTC (Real Time Clock), and outputs information indicating a current date and current clock time.

Functions of the change plan generation apparatus 10 are realized by causing the processor 11 to read and execute the programs stored in the main storage device 12. The programs can be, for example, recorded in a transportable recording medium and distributed. Alternatively, the programs can be downloaded to the change plan generation apparatus 10 from, for example, a delivery apparatus that accumulates and manages the programs via a communication facility. The change plan generation apparatus 10 may further include other functions including, for example, an operating system, a file system, a device driver, a DBMS (DataBase Management System), and a batch processing system (including a scheduler), in addition to the above functions. The change plan generation apparatus 10 stores various information (data) as, for example, tables and files of a database.

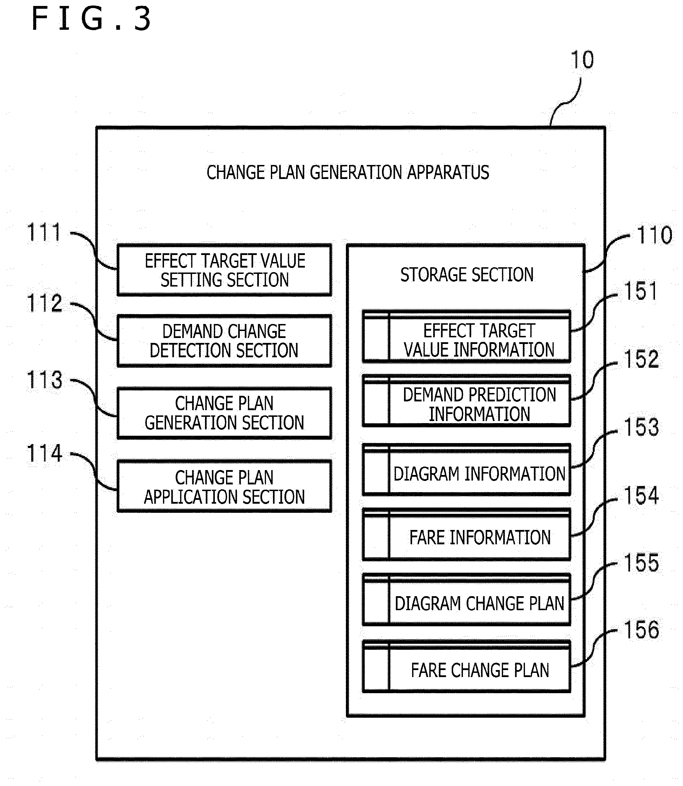

FIG. 3 depicts principal functions provided in the change plan generation apparatus 10. As depicted in FIG. 3, the change plan generation apparatus 10 includes functions as a storage section 110, an effect target value setting section 111, a demand change detection section 112, a change plan generation section 113, and a change plan application section 114.

Among these functions, the storage section 110 stores various pieces of information including effect target value information 151, demand prediction information 152, diagram information 153, fare information 154, a diagram change plan 155, and a fare change plan 156.

The effect target value setting section 111 receives an input of setting of effects (an increase in expected profit and a reduction in congestion degree) obtained by applying the change plan (changing the diagram and/or the fare), and stores the received target values as the effect target value information 151.

The demand change detection section 112 determines whether or not to generate a change plan on the basis of the demand prediction information 152 received from the demand prediction system 20. In a case of determining to generate a change plan, the demand change detection section 112 transmits an instruction to generate a change plan to the change plan generation section 113.

Upon receiving the instruction to generate a change plan from the demand change detection section 112, the change plan generation section 113 generates a change plan. The change plan generation section 113 acquires the latest diagram information 153 for use in generation of the change plan from the traffic control system 30 via the communication network 5. Furthermore, the change plan generation section 113 acquires the latest fare information 154 for use in generation of the change plan from the fare adjustment system 40 via the communication network 5. Details of processing associated with the generation of the change plan by the change plan generation section 113 will be described later.

The change plan application section 114 transmits update instructions based on the diagram change plan 155 and the fare change plan 156 to the traffic control system 30 and the fare adjustment system 40 via the communication network 5. Here, when a control cycle of the traffic control system 30 is shorter than a control cycle of the fare adjustment system 40, for example, a state in which fares of trains added by increasing a train frequency are unset possibly occurs. For that reason, it is necessary to perform update of the diagram information in the traffic control system 30 and update of the fare information in the fare adjustment system 40 simultaneously (it is to be noted, however, that simultaneously means herein that a temporal difference in a practically ignorable range is permitted). The change plan application section 114, therefore, when transmitting the update instructions, transmits inquiries about diagram updatable timing and fare information updatable timing to the traffic control system 30 and the fare adjustment system 40 via the communication network 5, receives replies from the traffic control system 30 and the fare adjustment system 40, and determines, based on the received replies, a transmission clock time of transmitting the update instructions to the traffic control system 30 and the fare adjustment system 40.

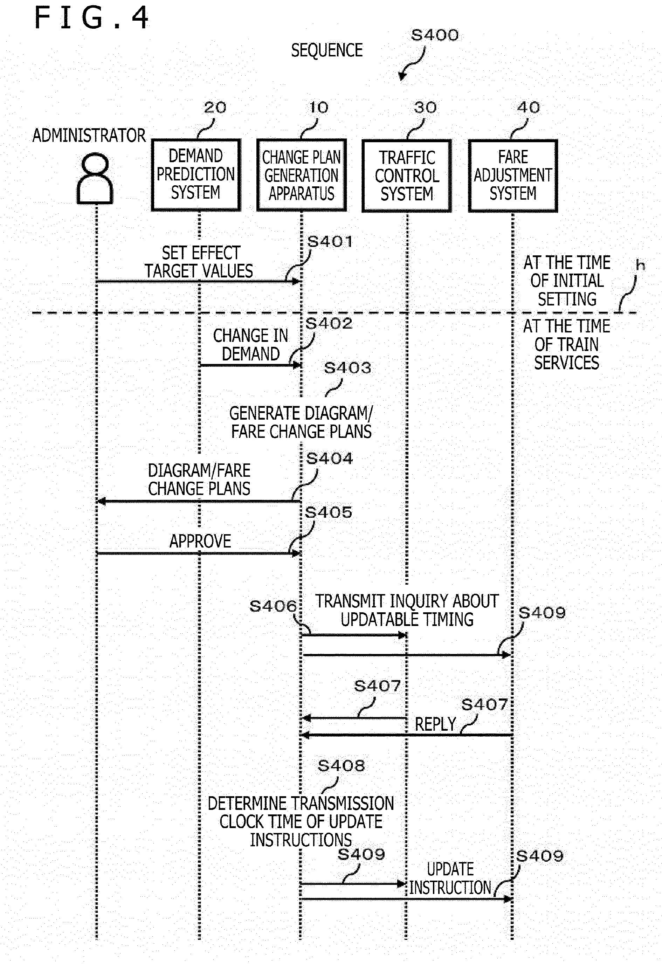

FIG. 4 is a sequence diagram illustrating a flow of processing performed by the information processing system 1 at times of generating and applying the change plan (hereinafter, referred to as "sequence S400"). The sequence S400 will be described with reference to FIG. 4. It is noted that a broken line h depicted in FIG. 4 represents a demarcation between processing performed by the change plan generation apparatus 10 at a time of initial setting and processing performed by the change plan generation apparatus 10 at a time of services.

As depicted in FIG. 4, at the time of initial setting by the change plan generation apparatus 10, the effect target value setting section 111 in the change plan generation apparatus 10 receives an input of the setting of the effect target values and the like from an administrator via the input device 114. The effect target value setting section 111 stores set contents as the effect target value information 151 (S401).

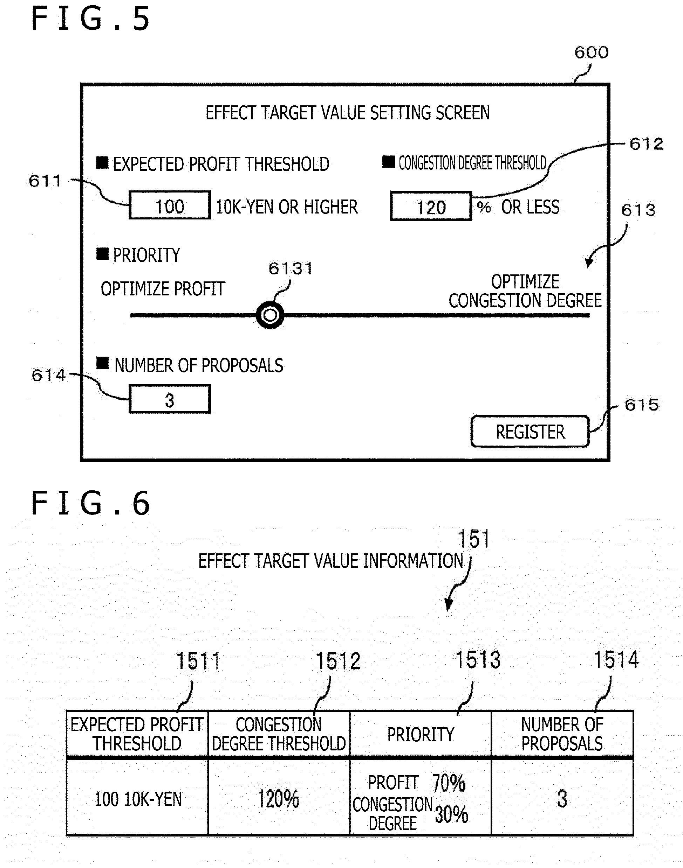

FIG. 5 is an example of a screen displayed by the effect target value setting section 111 on the output device 15 at the time of processing in S401 of FIG. 4 (hereinafter, referred to as "effect target value setting screen 600"). As depicted in FIG. 5, the effect target value setting screen 600 has an expected profit threshold setting field 611, a congestion degree threshold setting field 612, a priority setting field 613, a number-of-proposals setting field 614, and a REGISTER button 615.

In the expected profit threshold setting field 611, an expected profit threshold that is a target value (minimum value) of an expected profit is set. The expected profit is obtained by, for example, subtracting a train service cost from receipts of user fares. In the congestion degree threshold setting field 612, a congestion degree threshold that is a target value (maximum value) of a congestion degree is set. The congestion degree is obtained by, for example, dividing the number of boarding users in intended sections in an intended time zone by (the number of trains) × (the fixed number of passengers).

In the priority setting field 613, a priority that is information indicating which is prioritized how much, the expected profit or the congestion degree is set. In the present example, the administrator can easily set the priority by operating a slider 6131. In the number-of-proposals setting field 614, the number of change plans generated by the change plan generation section 113 is set.

When the administrator operates the REGISTER button 615 via the input device 114 after the contents are set on the effect target value setting screen 600, the effect target value setting section 111 generates the effect target value information 151 on the basis of the contents set on the effect target value setting screen 600.

FIG. 6 depicts an example of the effect target value information 151. As depicted in FIG. 6, the effect target value information 151 has an expected profit threshold item 1511, a congestion degree threshold item 1512, a priority item 1513, and a number-of-proposals item 1514.

With reference back to FIG. 4, if detecting a sign of a change in demand for the transport facility at a time of using the change plan generation apparatus 10, the demand prediction system 20 transmits demand prediction information to the change plan generation apparatus 10 via the communication network 5 (S402). The demand prediction information contains previous demand prediction data and latest demand prediction data. The demand prediction system 20 detects the sign of the change in demand for the transport facility on the basis of, for example, information about an end of an event such as a baseball game held in the surroundings of the lines, and the number of users grasped from the video pictures captured by the monitoring cameras at the stations and entry and exit situations at the automatic ticket checkers.

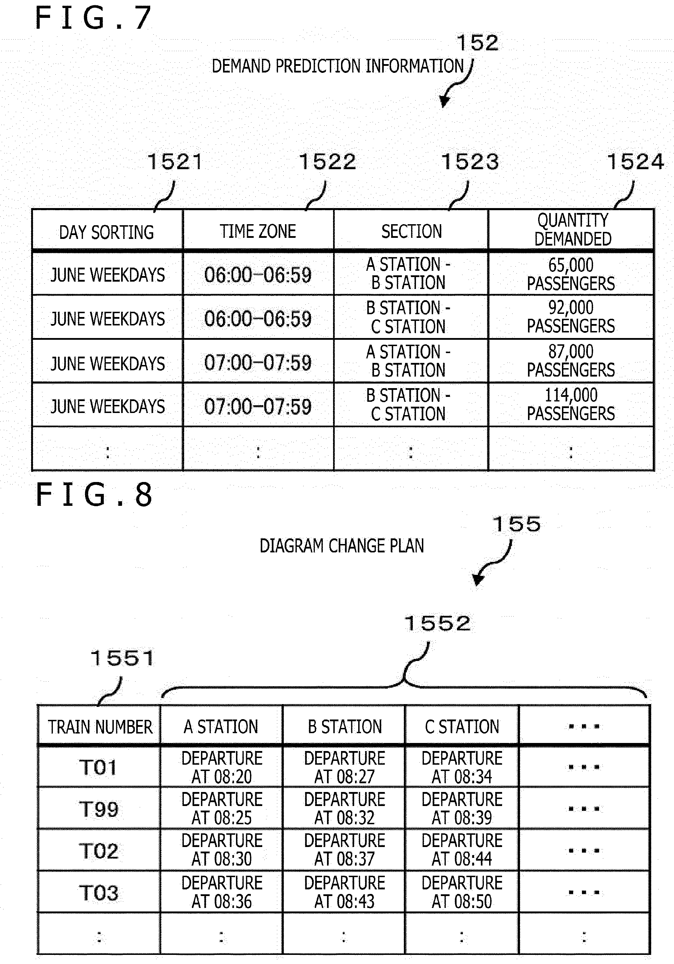

FIG. 7 depicts an example of the demand prediction information 152 received by and stored in the change plan generation apparatus 10. As depicted in FIG. 7, the demand prediction information 152 contains one or more records each having a day sorting item 1521, a time zone item 1522, a section item 1523, and a quantity demanded item 1524.

Among these items, in the day sorting item 1521, information indicating sorting of days (days of week such as weekdays, weekends, and national holidays, year, month, and the like) at which the demand prediction is performed is set. In the time zone item 1522, information indicating a time zone for which the demand prediction is performed is set. In the section item 1523, information indicating sections on railway lines for which the demand prediction is performed is set. In the quantity demanded item 1524, information indicating a quantity demanded predicted for the objects of the demand prediction is set.

With reference back to FIG. 4, upon receiving the demand prediction information from the demand prediction system 20, the demand change detection section 112 in the change plan generation apparatus 10 determines whether or not a time zone and sections in which an amount of increase in demand from a previous demand is equal to or greater than a first information are present by comparing the previous demand prediction data and the latest demand prediction data contained in the demand prediction information with each other. In addition, in a case of presence of the time zone and the sections, the demand change detection section 112 determines to generate a change plan and transmits an instruction to generate a change plan to the change plan generation section 113. For example, if the first threshold is set to a 1.5-fold amount of increase, a previous demand predicted value is 1,000 passengers and a latest demand predicted value is 2,000 passengers for the same object of the demand prediction, the amount of increase is a 2-fold amount of increase (≥ 1.5-fold amount of increase); thus, the demand change detection section 112 determines that the time zone and the sections in which the amount of increase from the previous demand is equal to or greater than the first threshold are present and transmits an instruction to generate a change plan.

Upon receiving the instruction to generate a change plan from the demand change detection section 112, the change plan generation section 113 generates the diagram change plan 155 and/or the fare change plan 156 (S403).

FIG. 8 depicts an example of the diagram change plan 155 generated by the change plan generation section 113. As depicted in FIG. 8, the exemplary diagram change plan 155 includes one or more records each having a train number item 1551 and a departure clock time item 1552 (which may be an arrival clock time item) per station.

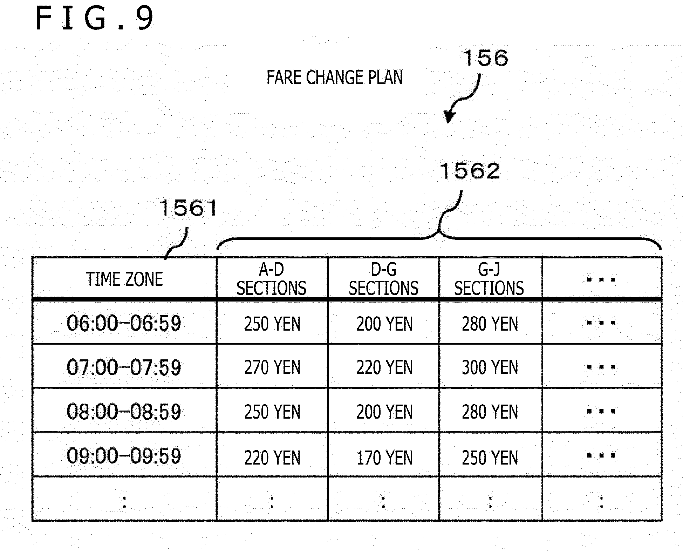

FIG. 9 depicts an example of the fare change plan 156 generated by the change plan generation section 113. As depicted in FIG. 9, the exemplary fare change plan 156 includes one or more records each having a time zone item 1561 and a fare item 1562 per section.

With reference back to FIG. 4, the change plan generation apparatus 10 subsequently presents the change plan to the administrator via the output device 15 (S404), and receives an administrator's indication of intention as to whether to approve the change plan via the input device 14 (S405) .

In a case of administrator's approving the change plan, the change plan application section 114 in the change plan generation apparatus 10 transmits inquiries about timing (first timing and second timing) at which the change plan is updatable to transmission destinations (the traffic control system 30 and the fare adjustment system 40) (S406), and receives replies to the inquiries from the transmission destinations (S407). The change plan application section 114 then determines a transmission clock time that is a clock time of transmitting update instructions to update the information (the diagram information and the fare information) to the transmission destinations on the basis of the replies received form the traffic control system 30 and the fare adjustment system 40, and waits for the transmission clock time to come (S408). When the transmission clock time comes, the change plan application section 114 transmits the update instructions to the transmission destinations (S409). It is noted that upon receiving the update instructions, the transmission destinations update the information (the diagram information and the fare information) on the basis of the received update instructions.

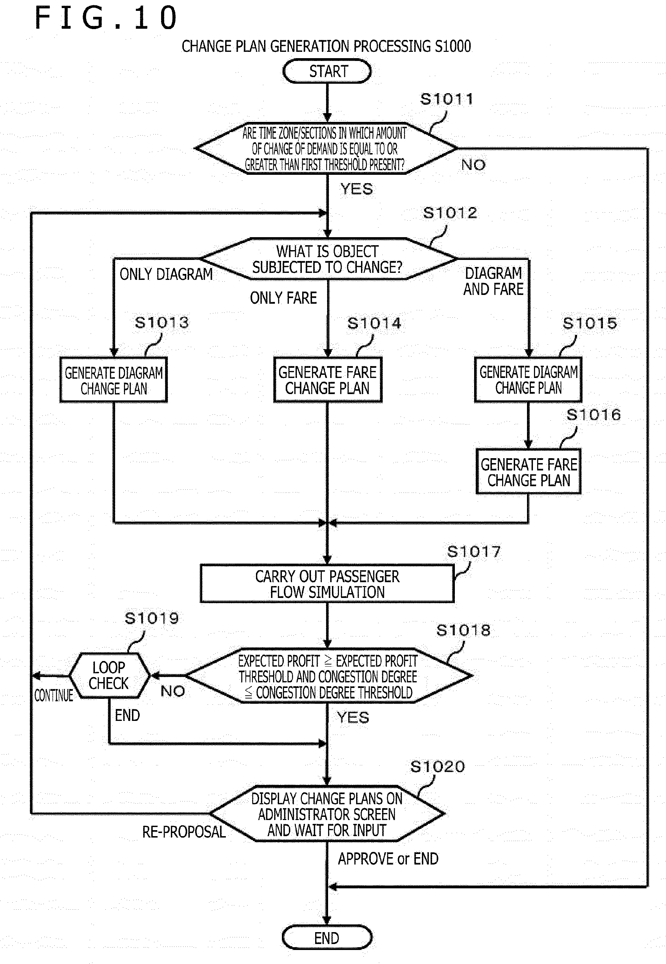

FIG. 10 is a flowchart illustrating details of processing performed by the change plan generation section 113 in the change plan generation apparatus 10 in S403 of FIG. 4 (hereinafter, referred to as "change plan generation processing S1000"). The change plan generation processing S1000 will be described hereinafter with reference to FIG. 10.

First, the change plan generation section 113 compares the previous demand prediction data and the latest demand prediction data contained in the demand prediction information 152 received from the demand prediction system 20 with each other, and determines whether or not a time zone and sections in which the amount of increase in the demand from the previous demand is equal to or greater than the first information are present (S1011). In a case of determining that the time zone and the sections are present (S1011: YES), the change plan generation section 113 goes to processing in S1012. In contrast, in a case of determining that the time zone and the sections are not present (S1011: NO), the change plan generation section 113 ends the change plan generation processing S1000.

In S1012, the change plan generation section 113 determines an object for which the change plan is generated, that is, determines whether to generate only the change plan of the diagram, whether to generate only the change plan of the fares, or whether to generate both the change plan of the diagram and the change plan of the fares. It is noted that the diagram change is made mainly for purposes of strengthening carrying power. In addition, fare change is made mainly for purposes of dispersing a peak of a congestion time zone by fare discounting.

For example, when the amount of increase in a demand predicted value is equal to or greater than a preset second threshold, the change plan generation section 113 determines to generate the change plans of both the diagram and the fares.

Furthermore, when the amount of increase in the demand predicted value is smaller than the second threshold and the time zone is a time zone in which congestion is routinely predicted (such as a morning or night commuting rush hour time zone or a time zone closer to a last train, hereinafter, referred to as "congestion prediction time zone"), many passengers are in a situation in which late coming is not acceptable or desire to get on the last train to go back home; thus, it is considered that an effect of fare discounting is low, and the change plan generation section 113, therefore, determines to generate only the change plan of the diagram.

Moreover, if the amount of increase in the demand predicted value is smaller than the second threshold and the time zone is other than the congestion prediction time zone, it is expected that passengers without urgent business select a time zone of lower fares (select dispersion boarding); thus, the change plan generation section 113 determines to generate only the change plan of fares (fare discounting plan).

In a case of determining to change only the diagram in S1012 (S1012: only diagram), the change plan generation section 113 generates only the change plan of the diagram (S1013). For example, the change plan generation section 113 generates a change plan to increase the number of trains in a time zone and sections of high demand, and generates, for example, a plurality of different change plans by changing the number of increased trains, departure clock times, stations at which trains make stops, destinations, and the like. It is noted that the change plan generation section 113 generates the diagram in which the number of trains increases in such a manner that the trains can practically run and do not collide using, for example, a well-known approach (for example, a constraint satisfaction solution). After processing in S1013, the change plan generation section 113 goes to processing in S1017.

In a case of determining to generate only the change plan of the fares in S1012 (S1012: only fare), the change plan generation section 113 generates only the change plan of the fares. For example, the change plan generation section 113 generates the change plan in which fares in the time zones before and after the time zone and the sections of high demand are discounted, and generates, for example, a plurality of different change plans by changing discounted amounts and the time zones. After processing in S1014, the change plan generation section 113 goes to processing in S1017.

In a case of determining to change both the diagrams and the fares in S1012 (S1012: diagram and fare), the change plan generation section 113 performs processing in S1015. In S1015, the change plan generation section 113 generates the change plan of the diagram in a method similar to the method described above and subsequently generates the change plan of the fares (S1016). In other words, the change plan generation section 113 generates a plurality of different change plans by changing the discounted amounts from the fares including those of trains increased in generating the change plan of the diagram. After processing in S1016, the change plan generation section 113 goes to processing in S1017.

In S1017, the change plan generation section 113 performs a user flow simulation for each of the generated change plans. It is noted that the change plan generation section 113 performs the user flow simulation for each of the generated change plans by, for example, a well-known method (such as a multiagent simulation approach with each user set as an agent and stations and trains set as an environment). After the change plan generation section 113 performs the user flow simulation for each change plan, it is possible to obtain information as to what train each user uses for each change plan.

Subsequently, the change plan generation section 113 calculates an expected profit and a congestion degree for each change plan on the basis of a result of the user flow simulation for each change plan, and determines whether or not the change plan for which the expected profit is equal to or higher than an expected profit threshold and the congestion degree is equal to or lower than a congestion degree threshold is present (S1018). In a case of presence of the change plan satisfying the conditions (S1018: YES), the change plan generation section 113 goes to processing in S1020. It is noted that the conditions in S1018 are given as an example only and other types of conditions may be used as long as the conditions are for selecting the change plan for which the expected profit is high and the congestion degree is low.

In contrast, in a case of absence of the change plan satisfying the conditions (S1018: NO), the change plan generation section 113 determines whether to end generation of the change plan (S1019). In a case of determining to end generation of the change plan (S1019; end), the change plan generation section 113 goes to processing in S1020. In a case of determining to continue generation of the change plan (S1019: continue), the change plan generation section 113 returns to the processing in S1012. It is noted that the change plan generation section 113 determines to end generation of the change plan, for example, when a loop from S1012 to S1019 is executed a preset number of time or more, when preset time is elapsed since start of the loop, or when a preset number or more of change plans are already generated.

In S1020, the change plan generation section 113 receives the administrator's indication of intention as to whether to display the change plan on the output device 15 and to approve the generated change plan, whether to desire re-proposal of the change plan, or whether to end the change plan generation processing S1000, from the administrator via the input device 14. In a case of receiving the administrator's indication of intention to the effect that the generated change plan is approved or to the effect that the change plan generation processing S1000 is ended (S1020: approve or end), the change plan generation section 113 ends the change plan generation processing S1000. On the other hand, in a case of receiving the administrator's indication of intention to the effect that re-proposal of the change plan is desired (S1020: re-proposal), the change plan generation section 113 returns to the processing in S1012.

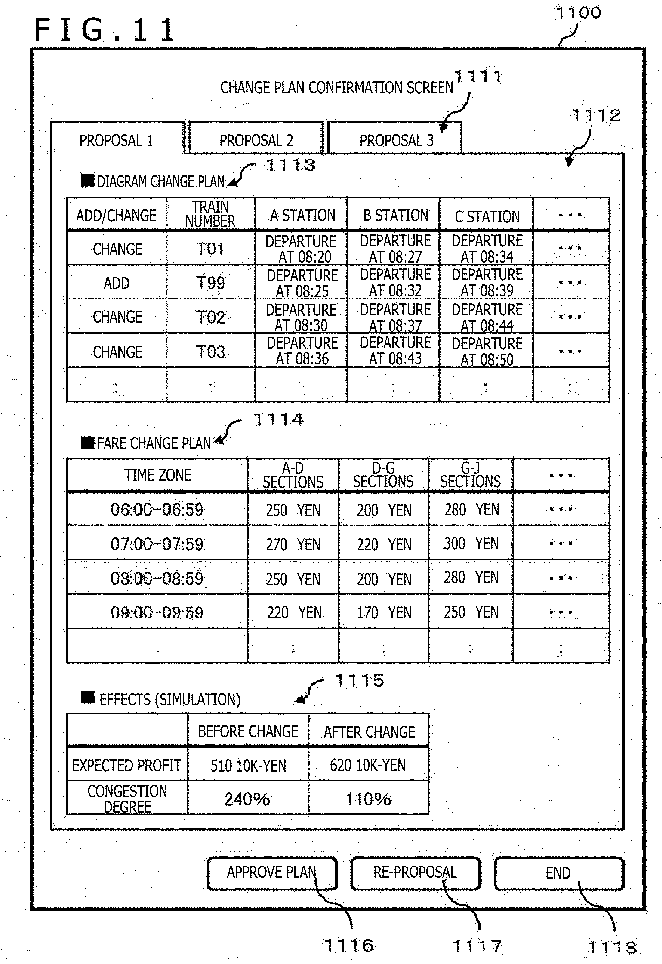

FIG. 11 is an example of a screen displayed by the change plan generation section 113 on the output device 15 at the time of the confirmation (hereinafter, referred to as "change plan confirmation screen 1100").

In the case of determining in S1020 of FIG. 10 that a plurality of change plans satisfying the conditions in S1018 are present, information about the plurality of change plans is displayed on the change plan confirmation screen 1100. It is noted that on the change plan confirmation screen 1100, the change plans by the number set in the number-of-proposals item 1514 of the effect target value information 151 are displayed. In the present example, three change plans ("proposal 1" to "proposal 3") are displayed on the change plan confirmation screen 1100 by a switching approach using tabs 1111. The change plan generation section 113 displays the tabs 1111 of the change plans in descending order of scores S obtained from the following Equation for the change plans.

In the Equation, I1 denotes the expected profit (10K-yen), 12 denotes the expected profit threshold (10K-yen), C1 denotes the congestion degree (%), C2 denotes the congestion degree threshold (%), X1 denotes the priority of the expected profit (%), and X2 denotes the priority of the congestion degree (%).

As depicted in FIG. 11, in a display region 1112 of one proposal selected by the tab 1111, a diagram change plan 1113, a fare change plan 1114, and effects 1115 obtained by the change plans are displayed. In the diagram change plan 1113, contents of the diagram change plan 155 are displayed. In a top item "add/change" of each record, information indicating whether a diagram in each record is changed or added is set. In the present example, a diagram in a second row is added, and diagrams at clock times in the surroundings of the added diagram are also changed to follow addition of the diagram.

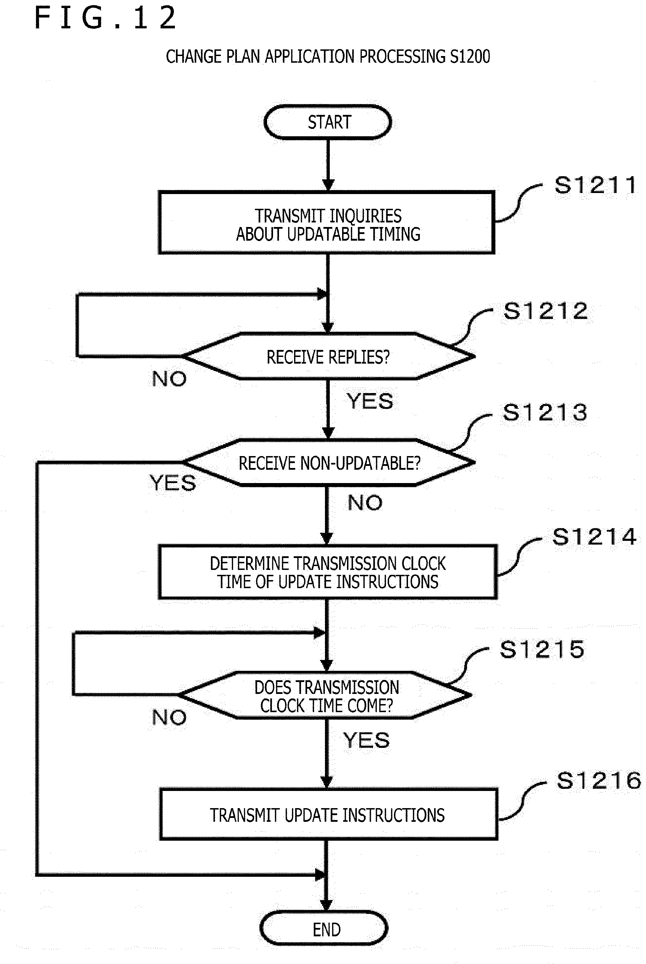

FIG. 12 is a flowchart illustrating processing performed by the change plan application section 114 in the change plan generation apparatus 10 in S406 to S409 of FIG. 4 (hereinafter, referred to as "change plan application processing S1200"). The change plan application processing S1200 will be described hereinafter with reference to FIG. 12.

First, the change plan application section 114 transmits the inquiries about the updatable timing (first timing and second timing) described above to the transmission destinations (the traffic control system 30 and the fare adjustment system 40) of the update instructions based on the change plan (S1211) and waits for receiving replies from the transmission destinations (S1212) .

Upon receiving the replies from the transmission destinations (S1212: YES), the change plan application section 114 subsequently determines whether contents of the received replies are "non-updatable" (S1213). When the contents of the received replies are "non-updatable" (S1213: YES), the change plan application section 114 ends the change plan application processing S1200. It is noted that the change plan application section 114 receives the replay of "non-updatable" when each transmission destination is not in a state of receiving update such as a case in which the diagram of the transport facility is disrupted.

When the contents of the received replies are not "non-updatable" (S1213: NO), the change plan application section 114 subsequently determines the transmission clock time of transmitting the update instructions to the transmission destinations (S1214). The change plan application section 114 determines a clock time at which the first timing of the traffic control system 30 coincides with the second timing of the fare adjustment system 40 (it is to be noted, however, that coincide means herein that a temporal difference in a practically ignorable range is permitted). For example, the updatable timing received from the traffic control system 30 is "15:02," "15:04," "15:06," "15:08," and "15:10," and the updatable timing received from the fare adjustment system 40 is "15:10" and "15:20," the change plan application section 114 determines "15:10" as the transmission clock time.

Subsequently, the change plan application section 114 waits for the determined transmission clock time to come (S1215). When the transmission clock time comes (S1215: YES), the change plan application section 114 transmits the update instructions to the transmission destinations (S1216).

As described so far in detail, the information processing system 1 according to the present embodiment generates and applies at least one of the change plan of the diagram and the change plan of the fares in response to the results of the demand prediction for the transport facility; thus, it is possible to effectively diminish the congestion in the transport facility while suppressing the operational cost.

Furthermore, the information processing system 1 generates and applies the change plan when the amount of increase in the demand for the transport facility is equal to or greater than the preset first threshold in the certain time zone; thus, in the case of an increase in demand for the transport facility, it is possible to appropriately guide the users of the transport facility and efficiently and reliably diminish the congestion in the transport facility.

Moreover, the information processing system 1 generates both the change plan of the diagram and the change plan of the fares when the amount of increase in the demand exceeds the second threshold; thus, even in a case of a great increase in demand, it is possible to reliably diminish the congestion.

Furthermore, the information processing system 1 generates and applies only the change plan of the diagram when the amount of increase in the demand is smaller than the second threshold and the time zone for which the demand prediction is performed is in a range of the congestion prediction time zone; thus, it is possible to reliably cope with the increase in demand and diminish the congestion without unnecessarily increasing the operational cost.

Moreover, the information processing system 1 generates and applies only the change plan of the fares when the amount of increase in the demand is smaller than the second threshold and the time zone for which the demand prediction is performed is out of the range of the congestion prediction time zone; thus, it is possible to appropriately guide the users of the transport facility and diminish the congestion without greatly increasing the operational cost due to the increase in the number of trains.

Furthermore, the information processing system 1 generates the change plan candidate for which the expected profit is equal to or higher than the target value (expected profit threshold) and the congestion degree is equal to or lower than the target value (congestion degree threshold); thus, it is possible to generate a highly effective change plan and reliably cope with the increase in demand.

Moreover, the information processing system 1 generates the selected candidate as the change plan; thus, it is possible to generate the change plan in response to user's needs. Furthermore, the information processing system 1 presents the change plan candidates to the output device 15 in the order determined on the basis of the priority; thus, each user can efficiently select one candidate as the change plan.

### <Providing information to users>

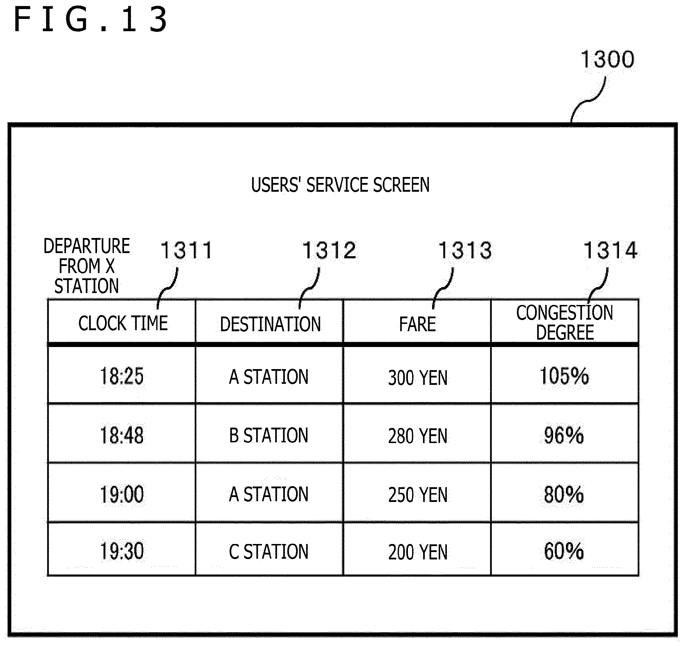

FIG. 13 is an example of a screen provided to users of the transport facility by the information processing system 1 (hereinafter, referred to as "users' service screen 1300"). The information processing system 1 provides (transmits) the users' service screen 1300 to, for example, an information processing apparatus (such as a smart phone, a personal computer, or a cellular telephone, hereinafter, referred to as "user's apparatus") operated by each user via the Internet. The users' service screen 1300 is provided to the user apparatus on an opportunity of, for example, the update of the diagram information and the fare information in the traffic control system 30 and the fare adjustment system 40. The users' service screen 1300 is provided to the user apparatus as, for example, a webpage.

On the users' service screen 1300 depicted in FIG. 13, information associated with a train departing from "X station" from now on is described. As depicted in FIG. 13, the users' service screen 1300 contains one or more records each having a clock time item 1311, a destination item 1312, a fare item 1313, and a congestion degree item 1314. Each record corresponds to one train.

The user refers to the users' service screen 1300, and decides to get on a train to be start earliest even with the high fares and the high congestion degree in a case of desiring to quickly move. Furthermore, in a case of, for example, no need to be quite in a hurry, the user decides to get on a next or following train with lower fares and the lower congestion degree.

Providing the users' service screen 1300 to the information processing apparatus operated by each user in this way makes it possible to appropriately and efficiently guide the user and effectively achieve diminishing of the congestion.

While one embodiment of the present invention has been described so far in detail, the present invention is not limited to the embodiment described so far and encompasses various modifications. Furthermore, the embodiment is described in detail for the purpose of describing the present invention in a recognizable manner, and the present invention is not necessarily limited to the system including all configurations described so far.

For example, while the case in which the change plan is generated and the change plan is then applied only if the administrator confirms and approves the change plan has been described above, the information processing system may be configured, for example, in such a manner as to apply a most effective change plan obtained by the user flow simulation without causing the administrator to confirm the change plan.

Moreover, while the example of discounting fares in units of time zones has been described above, different fares may be set per train. Furthermore, a point may be assigned without fare discounting. Moreover, not the fare but another type of fee such as a reserved seat fare may be discounted. Furthermore, extra fares may be set in the time zones before and after the congestion time zone without discounting the fares in these time zones.

Moreover, while the case in which the change plan generation apparatus 10 generates the change plan has been described above, the present invention is not limited to the case and, for example, the traffic control system 30 may generate the change plan of the fares and the fare adjustment system 40 may generate the change plan of the fares.

### Description of Reference Characters

1: Information processing system
10: Change plan generation apparatus
110: Storage section
151: Effect target value information
152: Demand prediction information
153: Diagram information
154: Fare information
155: Diagram change plan
156: Fare change plan
111: Effect target value setting section
112: Demand change detection section
113: Change plan generation section
114: Change plan application section
20: Demand prediction system
21: Demand prediction section
30: Traffic control system
31: Diagram information management section
40: Fare adjustment system
41: Fare information management section
5: Communication network
S400: Sequence
S1000: Change plan generation processing
S1200: Change plan application processing
600: Effect target value setting screen
1100: Change plan confirmation screen
1300: Users' service screen

## Claims

1. An information processing system for managing information associated with services of a transport facility, comprising:
a demand prediction section that performs demand prediction for the transport facility;
a diagram information management section that manages diagram information that is information associated with a diagram of the transport facility;
a fare information management section that manages fare information that is information associated with fares of the transport facility;
a change plan generation section that generates a change plan of at least one of the diagram and/or the fares in response to a result of the demand prediction; and
a change plan application section that applies the change plan of the diagram to the diagram information and that applies the change plan of the fares to the fare information.

2. The information processing system according to claim 1, wherein
the demand prediction section repeatedly performs the demand prediction, and
the change plan generation section generates the change plan when an amount of increase in a demand in a certain time zone is equal to or greater than a preset first threshold.

3. The information processing system according to claim 2, wherein
the change plan generation section generates both the change plan of the diagram and the change plan of the fares when the amount of increase in the demand is equal to or greater than a preset second threshold at a time of generating the change plan.

4. The information processing system according to claim 3, further comprising:
a storage section that stores information indicating a congestion prediction time zone that is a time zone in which the demand for the transport facility is predicted to increase, wherein
the change plan generation section generates the change plan of the diagram and does not generate the change plan of the fares when the amount of increase in the demand is smaller than the second threshold and a time zone for which the demand prediction is performed is the congestion prediction time zone at the time of generating the change plan.

5. The information processing system according to claim 3, further comprising:
a storage section that stores information indicating a congestion prediction time zone that is a time zone in which the demand for the transport facility is predicted to increase, wherein
the change plan generation section generates the change plan of the fares and does not generate the change plan of the diagram when the amount of change in the demand is smaller than the second threshold and a time zone for which the demand prediction is preformed is not the congestion prediction time zone at the time of generating the change plan.

6. The information processing system according to claim 1, further comprising:
a storage section that stores a target value of an expected profit of the transport facility and a target value of a congestion degree of the transport facility, wherein
the change plan generation section generates change plan candidates of at least one of the change plan of the diagram and/or the change plan of the fares, obtains the expected profit and the congestion degree by a simulation in a case of applying each of the generated change plan candidates, and generates, as the change plan, the change plan candidate for which the expected profit is equal to or higher than the target value of the expected profit and the congestion degree is equal to or lower than the target value of the congestion degree.

7. The information processing system according to claim 6, comprising:
an output device that presents information; and
an input device that receives an input of information, wherein
the change plan generation section presents the change plan candidates to the output device, receives selection of one of the change plan candidates via the input device, and generates the selected change plan candidate as the change plan.

8. The information processing system according to claim 6, comprising:
an output device that presents information; and
an input device that receives an input of information, wherein
the storage section stores a priority that is information indicating which is prioritized, the expected profit or the congestion degree, how much, and
the change plan generation section presents the change plan candidates to the output device in an order determined based on the priority, receives selection of one of the change plan candidates via the input device, and generates the selected change plan candidate as the change plan.

9. The information processing system according to claim 8, comprising:
the input device that receives the input of the information, wherein
the change plan generation section receives setting of the priority via the input device.

10. The information processing system according to claim 3, wherein
the change plan application section,
when the change plan generation section generates both the change plan of the diagram and the change plan of the fares,
acquires first timing at which the diagram information can be updated from the diagram information management section,
acquires second timing at which the fare information can be updated from the fare information management section,
determines a clock time at which the first timing and the second timing coincide with each other as an update clock time of the diagram information and the fare information, and
transmits an update instruction to update the diagram information to the diagram information management section and transmits the update instruction to update the fare information to the fare information management section when the update clock time comes.

11. An information processing method implemented by an information processing apparatus, comprising:
a step of performing demand prediction for a transport facility;
a step of managing diagram information that is information associated with a diagram of the transport facility;
a step of managing fare information that is information associated with fares of the transport facility;
a step of generating a change plan of at least one of the diagram and/or the fares in response to a result of the demand prediction; and
a step of applying the change plan of the diagram to the diagram information and applying the change plan of the fares to the fare information.

12. The information processing method according to claim 11, further executing:
by the information processing apparatus,
a step of repeatedly performing the demand prediction; and
a step of generating the change plan when an amount of increase in a demand in a certain time zone is equal to or greater than a preset first threshold.

13. The information processing method according to claim 12, further comprising:
a step of generating both the change plan of the diagram and the change plan of the fares when the amount of increase in the demand is equal to or greater than a preset second threshold at a time of generating the change plan.

14. The information processing method according to claim 13, further comprising:
a step of storing information indicating a congestion prediction time zone that is a time zone in which the demand for the transport facility is predicted to increase; and
a step of generating the change plan of the diagram and not generating the change plan of the fare when the amount of increase in the demand is smaller than the second threshold and a time zone for which the demand prediction is performed is the congestion prediction time zone.

15. The information processing method according to claim 13, further comprising:
a step of storing information indicating a congestion prediction time zone that is a time zone in which the demand for the transport facility is predicted to increase; and
a step of generating the change plan of the fares and not generating the change plan of the diagram when the amount of change in the demand is smaller than the second threshold and a time zone for which the demand prediction is performed is not the congestion prediction time zone.
